# EUROPÄISCHE PATENTSCHRIFT

(11) **EP 3 476 774 B1**
(45) Veröffentlichungstag und Bekanntmachung des Hinweises auf die Patenterteilung: **07.12.2022**
(21) Anmeldenummer: 18202141.0
(22) Anmeldetag: 23.10.2018
(51) Int. Cl.: B65G 21/06, B65G 21/10, B65G 21/14

(54) **FÖRDEREINRICHTUNG**
TRANSPORT DEVICE
TRANSPORTEUR

(30) Priorität: 26.10.2017 DE 102017125110
(43) Veröffentlichungstag der Anmeldung: 01.05.2019
(73) Patentinhaber: Weber Maschinenbau GmbH Breidenbach, 35236 Breidenbach (DE)
(72) Erfinder: Jung-Sassmannshausen, Fabian, 35080 Bad Endbach (DE); Kuhmichel, Christoph, 57334 Bad Laasphe (DE)
(74) Vertreter: Manitz Finsterwald Patent- und Rechtsanwaltspartnerschaft mbB

(56) Entgegenhaltungen:
- EP-A2- 2 923 955
- WO-A2-2005/057144
- DE-A1-102013 203 457
- JP-A- H09 297 051
- US-A- 5 304 745

## Beschreibung

Die Erfindung betrifft eine Fördereinheit nach dem Oberbegriff des Anspruchs 1. Die Erfindung betrifft außerderm eine Fördereinrichtung mit einer am Boden abgestützten Basis, insbesondere einem Gestell oder einem Gehäuse, sowie einer von der Basis getragenen, in einer im Folgenden auch als Längsrichtung bezeichneten Förderrichtung verlaufenden Förderstrecke.

Derartige Fördereinheit oder Fördereinrichtungen werden beispielsweise in Verarbeitungslinien für Lebensmittelprodukte eingesetzt. Am Anfang einer derartigen Linie stehen zum Beispiel ein oder mehrere Slicer, die Lebensmittelprodukte wie z.B. Wurst, Fleisch oder Käse in Stücke oder Scheiben schneiden. Am Linienende kann sich eine Verpackungsmaschine befinden, an der die erzeugten Stücke oder Scheiben bzw. jeweils mehrere Scheiben umfassende Portionen automatisch verpackt werden.

Dabei dient die Förderstrecke zwischen den Slicern und der Verpackungsmaschine nicht nur dem reinen Transport dieser Produkte, sondern es sind in Abhängigkeit von der jeweiligen Anwendung in der Praxis entlang der Förderstrecke weitere Aufgabe zu erfüllen.

Hierzu gehören beispielsweise ein Sortieren von Produkten sowie ein vorübergehendes Puffern von Produkten. Letzteres resultiert insbesondere aus unterschiedlichen Arbeitsgeschwindigkeiten von Slicer einerseits und Verpackungsmaschine andererseits im Hinblick auf die Anzahl der pro Zeiteinheit hergestellten bzw. verpackten Produkte. Für das Puffern von Produkten muss eine bestimmte Förderstrecke bereitgestellt werden. Bekannte Pufferstrecken bestehen oft aus komplexen Förderbandanlagen mit in mehreren Ebenen übereinander angeordneten Förderbandstrecken.

Da Verpackungsmaschinen häufig formatweise arbeiten, ist es zudem notwendig, auf der Transportstrecke die mittels der mittels der Slicer erzeugten Produkte zu passenden Formatsätzen, d.h. in regelmäßigen Anordnungen oder Arrays mit mehreren Produktzeilen und Produktspalten, zusammenzustellen.

Eine weitere entlang der Transportstrecke zu erbringende Funktion besteht in der Praxis häufig darin, aus Teilportionen Gesamtportionen zu bilden, indem Teilportionen übereinander gelegt werden, sodass die Teilportionen einander vollständig oder teilweise überlappen. Überlappungseinrichtungen, die eine solche Funktion während des Transports der Produkte erfüllen können, sind grundsätzlich bekannt und können in die jeweilige Transportstrecke integriert werden.

Eine besondere Bedeutung kommt auch der Anbindung oder Ankopplung der Förderstrecke an die Verpackungsmaschine bzw. an dort vorhandene Handhabungsvorrichtungen wie insbesondere Robotereinheiten zu, mit denen die herangeführten Produkte an die Verpackungsmaschine übergeben werden können. Unabhängig davon, ob mit oder ohne Robotereinsatz verpackt wird, muss die das Ende der Transportstrecke bildende Fördereinrichtung die Produkte in jedem Fall derart bereitstellen, dass die Verpackungsmaschine effizient arbeiten kann.

Die vorstehenden Ausführungen machen deutlich, dass insbesondere in einer Verarbeitungslinie für Lebensmittelprodukte an die Förderstrecke vielfältige Anforderungen gestellt werden. Die Betreiber derartiger Anlagen benötigen daher unterschiedliche Spezialeinrichtungen, die zudem häufig komplex und massiv aufgebaut und folglich unflexibel in der Handhabung sowie aufwendig zu reinigen sind.

Der allgemein übliche Aufbau bekannter Fördereinheit oder Fördereinrichtungen umfasst auf der einen, in Förderrichtung linken oder rechten Seite ein massives Trag- und Antriebsgehäuse, aus welchem zur anderen Seite - der Bedienseite - Förderbänder bzw. Antriebswellen für die Förderbänder auskragen. Eine solche seitlich auskragende Förderstrecke kann zwar beispielsweise eine darunter stehende Verpackungsmaschine überragen, führt insgesamt aber zu einem sehr massiven, Platz raubenden Gesamtaufbau.

Eine beispielsweise aus DE 102 384 82 A1 bekannte Möglichkeit, das gesamte Antriebsgehäuse samt Förderstrecke um eine Längsachse zu verschwenken, erlaubt es zwar dem Benutzer, Zugang zu einer unterhalb der Förderstrecke angeordneten Einrichtung zu verschaffen, ändert aber nichts an dem großen Gesamtaufbau.

Einen ähnlichen Aufbau, jedoch mit der Möglichkeit zur Entkoppelung der Förderbänder von dem Antriebsgehäuse zeigt DE 10 2014 106 740 A1. Die Förderbänder können hier zwar ohne das Antriebsgehäuse verschwenkt werden. Der Nachteil des aufgrund der Unterbringung der Antriebstechnik massiven Antriebsgehäuses bleibt aber bestehen.

Ein höherer Grad an Flexibilität wird bei einem aus DE 10 2013 206 510 A1 bekannten Konzept mit entnehmbaren Bandkassetten erreicht. Die Reinigung, die Wartung sowie die Anpassung der Förderstrecke an unterschiedliche Anwendungen werden hierdurch erleichtert. Allerdings verbleiben hier die Bandantriebe bei entnommenen Kassetten am Untergestell, was Maßnahmen zur Koppelung und Entkoppelung zwischen den Kassetten und den Antrieben erfordert. Zudem verringert diese Aufteilung in Förderband einerseits und Bandantrieb andererseits die Möglichkeiten einer flexiblen Gestaltung der Förderstrecke.

Aus DE 10 2015 104 055 A1 ist eine Kombination aus dem vorstehend erwähnten Kassettenkonzept und einer Überlappungsfunktion zum Überlappen von Lebensmittelprodukten während des Transports bekannt.

WO 2005/057144 A2 offenbart eine Fördereinheit nach dem Oberbegriff des Anspruchs 1.

Aufgabe der Erfindung ist es, eine Fördereinheit oder eine Fördereinrichtung der eingangs genannten Art zu schaffen, die bei einem möglichst einfachen, insbesondere unter Hygienegesichtspunkten gut zu reinigenden Aufbau vielseitig verwendbar und auf einfache Weise an unterschiedliche Anwendungen anpassbar ist.

Die Lösung dieser Aufgabe erfolgt durch die Merkmale des Anspruchs 1. Erfindungsgemäß umfasst die Fördereinheit oder die Fördereinrichtung wenigstens zwei sich in Längsrichtung erstreckende und in Querrichtung voneinander beabstandete Längsträger sowie eine Mehrzahl von in Längsrichtung hintereinander angeordneten, von den Längsträgern getragenen Aufnahmen, an denen individuell anbringbare und abnehmbare Förderbandabschnitte abgestützt sind, die zusammen die in Längsrichtung verlaufende Förderstrecke bilden, wobei die Aufnahmen für die Förderbandabschnitte asymmetrisch ausgebildet sind und jeweils eine Tragseite zur Kraftableitung in die Längsträger sowie eine Zugangsseite umfassen, über welche der jeweilige Förderbandabschnitt seitlich anbringbar und abnehmbar ist.

Die Erfindung bedeutet folglich eine Abkehr nicht nur von den üblichen, fest installierten Förderbandsystemen, sondern auch von den bislang bekannten Kassettenkonzepten, bei denen die Positionen und Förderlängen der einzelnen Förderbandkassetten fest vorgegeben sind. Denn erfindungsgemäß wird durch die in Förderrichtung verlaufenden Längsträger eine Möglichkeit geschaffen, Förderbandabschnitte unterschiedlicher Funktionalität in beliebiger Zahl und unterschiedlicher Länge variabel zusammenzustellen und an unterschiedlichen Positionen entlang der Längsträger zu fixieren.

Besonders vorteilhaft ist dabei das modulare Konzept der erfindungsgemäßen Fördereinrichtung. Die Förderstrecke kann individuell in Abhängigkeit von der jeweiligen Anwendung aus einer Mehrzahl von Förder-Modulen zusammengesetzt werden, die jeweils in Form eines individuell anbringbaren und abnehmbaren Förderbandabschnitts vorgesehen sind. Auch die Aufnahmen für die Förderbandabschnitte können als individuell an den Längsträgern anbringbare und in der Länge an die Förderbandabschnitte angepasste Trag-Module vorgesehen werden.

Für den Aufbau der Längsträger, der Aufnahmen sowie der Förderbandabschnitte selbst können in vorteilhafter Weise relativ viele Gleichteile verwendet werden, wie sich insbesondere aus den nachstehend näher erläuterten Weiterbildungen der Erfindung ergibt.

Gemäß einer vorteilhaften Weiterbildung ist vorgesehen, dass eine Schnittstelle zur Anbringung der Förderbandabschnitte an den Aufnahmen an allen Förderbandabschnitten und Aufnahmen gleich ausgeführt ist. Hierdurch ist prinzipiell jeder Förderbandabschnitt mit jeder Aufnahme kompatibel, wobei allenfalls eine Anpassung der Länge erforderlich sein kann. Letzteres kann durch einen modularen Aufbau der Aufnahmen auf einfache Weise realisiert werden.

Bevorzugte Ausgestaltungen ergeben sich aus den nachstehenden Ausführungen und sind auch den Ansprüchen sowie den Figuren zu entnehmen.

Die Aufnahmen können jeweils wenigstens zwei in Längsrichtung beabstandete, den Abstand zwischen den Längsträgers in Querrichtung überbrückende Querträger umfassen. Die Querträger bilden einen stabilen Unterbau für die Anordnung des jeweiligen Förderbandabschnitts auf den Längsträgern.

Aufnahmen unterschiedlicher Länge können baugleiche Querträger aufweisen und brauchen lediglich durch die Wahl passend bemessener Abstandselemente an die Länge des jeweiligen Förderbandabschnitts angepasst zu werden. Für eine Arbeitsbreite, d.h. für einen vorgegebenen Abstand der Längsträger in Querrichtung, braucht insbesondere nur eine einzige Ausführung des Querträgers vorgesehen zu sein, d.h. die Querträger aller Aufnahmen können baugleich sein. Dies kann auch für nachstehend näher erläuterte Bauteile der Aufnahmen vorgesehen sein, die als Schnittstelle zur Anbringung der Förderbandabschnitte dienen, z.B. für an Abstandselementen zwischen Querträgern angebrachte Haltedorne, auf welche die Förderbandabschnitte aufgesteckt werden.

Durch einen solchen modularen Aufbau lässt sich die Anzahl unterschiedlicher Bauteile für die Aufnahmen auf ein Minimum reduzieren.

Insgesamt wird durch die Längsträger und die Querträger ein Tragwerk für die Förderbandabschnitte bzw. deren Förderbandkassetten geschaffen, das grundsätzlich an beliebig ausgestalteten Gestellen und Gehäusen angebracht werden kann, und zwar nicht nur an einer eigens für die Förderstrecke vorgesehenen Basis, sondern auch an einer Basis einer anderen Einrichtung der betreffenden Linie, z.B. an dem Gestell oder Gehäuse einer Verpackungsmaschine, an dem Gestell eines Slicers im Portionierbereich oder an dem Gestell eines Roboters, insbesondere im Einlaufbereich eines sogenannten Pickroboters oder Pickers. Das erfindungsgemäße Tragwerk eignet sich folglich besonders gut für die Integration unterschiedlicher Einrichtungen in einer Funktionseinheit, z.B. für die Integration einer Fördereinrichtung in eine Verpackungsmaschine. Dies gilt auch für Ausführungsformen mit Aufnahmen, die keine Querträger umfassen.

Bevorzugt sind die Querträger jeweils an den Längsträgern lösbar fixiert. Die lösbare Anbringung ermöglicht auf einfache Weise eine Veränderung der Position der betreffenden Aufnahme entlang der Längsträger. Eine solche Veränderung kann beispielsweise dann erfolgen, wenn - je nach Anwendung - die Länge der Förderstrecke verändert werden soll und so unterschiedlich lange Förderbandabschnitte verwendet werden sollen, oder wenn ein oder mehrere Förderbandabschnitte ausgebaut oder ausgeschwenkt werden soll und die dadurch entstandene Lücke von anderen Förderbandabschnitten in einer anderen Aufreihung gefüllt werden muss. Vorzugsweise sind die Querträger jeweils im Bereich der Längsträger als lösbare Klemme zur Fixierung an den Längsträgern ausgebildet. Eine Klemmverbindung lässt sich besonders schnell und einfach herstellen und wieder lösen.

In einer bevorzugten Ausgestaltung umfassen die Querträger jeweils ein Oberteil und ein dem Oberteil zugeordnetes Unterteil, wobei das Oberteil und das Unterteil jeweils im Bereich der Längsträger eine Klemme zur Fixierung an einem jeweiligen Längsträger bilden. Bevorzugt handelt es sich bei Oberteil und Unterteil um separate Bauelemente. Grundsätzlich können Oberteil und Unterteil aber auch permanent miteinander verbunden und z.B. einstückig miteinander ausgebildet sein. Eine Verbindung zwischen Oberteil und Unterteil, beispielsweise in Querrichtung etwa mittig zwischen zwei Längsträgern, kann bei entsprechender Ausgestaltung eine relative Bewegbarkeit seitlicher Klemmabschnitte ermöglichen, sodass ein Oberteil und ein Unterteil auch dann an den Längsträgern festklemmbar ist, wenn das Oberteil und das Unterteil an einer geeigneten Stelle fest miteinander verbunden oder sogar einstückig miteinander ausgebildet sind.

Vorzugsweise sind die Querträger entlang der Längsträger verstellbar, wobei insbesondere eine zumindest bereichsweise stufenlose Verstellbarkeit vorgesehen ist. Hierdurch können die Aufnahmen und folglich die betreffenden Förderbandabschnitte besonders flexibel in Längsrichtung positioniert werden.

Anstelle einer stufenlosen Verstellbarkeit in Längsrichtung kann auch eine Feinrasterung zwischen den Aufnahmen bzw. deren Querträgern einerseits und den Längsträgern andererseits vorgesehen sein. Zum Beispiel können eine Vielzahl von in Längsrichtung verteilt angeordneten Verbindungs- oder Koppelstellen vorgesehen sein, an denen die Querträger an den Längsträgern fixiert werden können. Die Längsträger können z.B. jeweils eine sich in Längsrichtung erstreckende Lochreihe aufweisen, in welche die Aufnahmen bzw. deren Querträger mit Verbindungsstiften einsteckbar sind. Eine ausreichend genaue Feineinstellung der Längsposition der Querträger bzw. der Aufnahmen kann durch ein entsprechend feines Raster von Verbindungs- bzw. Koppelstellen ermöglicht werden.

In einer weiteren bevorzugten Ausgestaltung sind die Querträger in einer senkrecht zur Längsrichtung verlaufenden Ebene relativ zu den Längsträgern quer verstellbar. Insbesondere ist diese Verstellbarkeit stufenlos möglich. Anstelle einer stufenlosen Verstellbarkeit kann auch eine solche vorgesehen sein, wie sie vorstehend hinsichtlich der Verstellbarkeit der Querträger in Längsrichtung beschrieben ist. Eine Querverstellbarkeit der Querträger ermöglicht eine Ausrichtung des Förderbandabschnitts relativ zu dem Gestell sowie eine Ausrichtung der Förderbandabschnitte untereinander. Insbesondere können hierdurch die Bandübergänge zwischen unmittelbar aufeinander folgenden Förderbandabschnitten exakt eingestellt werden.

Vorzugsweise sind jeweils mit den Querträgern zusammenwirkende Stützflächen der Längsträger zur Horizontalen geneigt. Insbesondere ist vorgesehen, dass diese Stützflächen jeweils zur Seite nach außen abfallen. Hierdurch kann erreicht werden, dass bei einem Verstellen des Querträgers in Querrichtung sich die Orientierung des Förderbandabschnitts zur Horizontalen verändert. Das Förderband kann also entweder horizontal oder geringfügig geneigt positioniert werden. Dies eröffnet eine zusätzliche Einstellmöglichkeit und somit eine zusätzliche Möglichkeit der Relativausrichtung zwischen den Förderbandabschnitten. Insbesondere erleichtert diese Ausgestaltung die Ausrichtbarkeit der Förderbandabschnitte an vorgeschalteten oder nachgeschalteten Fördereinrichtungen, insbesondere im Hinblick auf eine Optimierung der jeweiligen Übergänge zwischen den Bandabschnitten.

Bevorzugt ist vorgesehen, dass von den Querträgern jeweils gebildete Klemmen jeweils eine Spanneinrichtung umfassen. Bevorzugt sind die Klemmen jeweils von einem Oberteil und einem dem Oberteil zugeordneten Unterteil des jeweiligen Querträgers gebildet, die zum Einklemmen des jeweiligen Längsträgers mittels einer Spanneinrichtung miteinander verspannbar sind.

Die Spanneinrichtung kann wenigstens eine Spannschraube umfassen. Insbesondere ist die Spannschraube zwischen einem Oberteil und einem dem Oberteil zugeordneten Unterteil des jeweiligen Querträgers wirksam.

Die Klemmung zwischen den Querträgern und den Längsträgern lässt sich jeweils besonders effektiv gestalten, wenn gemäß einer Weiterbildung der Erfindung jeweils von einem Oberteil und einem dem Oberteil zugeordneten Unterteil der Querträger gebildete Klemmen jeweils eine Klemmstelle, an welcher ein Längsträger zwischen dem Oberteil und dem Unterteil einklemmbar ist, und eine von der Klemmstelle in Querrichtung beabstandete Abstützstelle umfassen, an welcher das Oberteil und das Unterteil aneinander abstützbar sind. Dabei ist zwischen der Klemmstelle und der Abstützstelle jeweils eine Spanneinrichtung wirksam, mit der das Oberteil und das Unterteil miteinander verspannbar sind.

Gemäß der Erfindung sind die Aufnahmen für die Förderbandabschnitte asymmetrisch ausgebildet und umfassen jeweils eine Tragseite zur Kraftableitung in die Längsträger sowie eine Zugangsseite, über welche der jeweilige Förderbandabschnitt seitlich anbringbar oder abnehmbar ist. Die Förderbandabschnitte müssen folglich nicht von oben eingesetzt bzw. nach oben abgenommen werden. Vielmehr ist durch diese Weiterbildung der Erfindung eine einfachere seitliche Handhabung möglich. Besonders vorteilhaft ist dies auch für eine Montage und Demontage der Bänder bzw. Bandgurte der Förderbandabschnitte, beispielsweise zu Reinigungszwecken, da die Bänder bzw. Bandgurte dann einfach seitlich abgenommen und wieder angebracht werden können, ohne dass jeweils der gesamte Förderbandabschnitt abgenommen werden muss.

Diese Asymmetrie hat außerdem den Vorteil, dass die Zugangsseite einfach durch eine um 180° gedrehte Montage der Aufnahmen auf den Längsträgern bzw. der Gesamtanordnung aus Längsträgern und Aufnahmen auf der Basis die Zugangsseite wahlweise auf der linken oder der rechten Seite der Fördereinrichtung liegen kann.

Insbesondere können die Querträger oder Oberteile der Querträger jeweils einen sich in Querrichtung erstreckenden Stützabschnitt zur Abstützung an den Längsträgern sowie einen sich von dem Stützabschnitt nach oben erstreckenden Tragabschnitt umfassen. Bevorzugt ist der Tragabschnitt im Bereich eines Endes des Stützabschnitts angeordnet.

In einer möglichen Ausgestaltung sind die Querträger oder Oberteile der Querträger jeweils in Längsrichtung gesehen L-förmig ausgebildet.

Des Weiteren ist in einem Ausführungsbeispiel vorgesehen, dass die Förderbandabschnitte jeweils von einem sich in Längsrichtung zwischen den Querträgern erstreckenden, mit den Querträgern verbundenen Abstandselement getragen sind.

Das Abstandselement kann mit Tragabschnitten der Querträger oder mit Tragabschnitten von Oberteilen der Querträger verbunden sein, die sich jeweils von einem Stützabschnitt des jeweiligen Querträgers oder Oberteils nach oben erstrecken.

Insbesondere dann, wenn eine asymmetrische Ausgestaltung der Aufnahmen vorgesehen ist, wie sie vorstehend beschrieben ist, kann durch diese Anordnung von Querträgern und Abstandselement eine insgesamt gabelartige Struktur geschaffen werden, bei der sich das Abstandselement seitlich, also im Bereich eines der Längsträger, befindet und zudem gegenüber dem Längsträger erhöht angebracht ist. Wenn gemäß einer bevorzugten Weiterbildung der Erfindung das Abstandselement dazu ausgebildet ist, den Förderbandabschnitt abzustützen, dann wird unterhalb des Förderbandabschnitts kein Bauraum für die den Förderbandabschnitt tragende Aufnahme benötigt.

Insgesamt kann hierdurch eine offene, leicht zu reinigende und gleichwohl stabile Tragstruktur für den jeweiligen Förderbandabschnitt realisiert werden, die bei Bedarf zumindest bei abgenommenem Förderbandabschnitt einen Zugang zu der Basis von oben erlaubt.

Des Weiteren kann vorgesehen sein, dass die Aufnahmen jeweils wenigstens einen an einer Seite gehaltenen und zur anderen Seite hin frei auskragenden Halter umfassen, über den ein jeweiliger Förderbandabschnitt mit der Aufnahme koppelbar ist.

Bevorzugt ist der Halter an einem Abstandselement zwischen den Querträgern angebracht. Vorzugsweise ist der Förderbandabschnitt durch seitliches Aufschieben oder Aufstecken auf den Halter mit der Aufnahme koppelbar. Der Halter kann beispielsweise als Dorn oder Stab ausgebildet sein.

Die Querträger oder Oberteile und den Oberteilen jeweils zugeordnete Unterteile der Querträger können jeweils aus einem Flachmaterial, insbesondere durch Ausschneiden oder Ausstanzen, hergestellt und stehend, mit ihren Flachseiten in Längsrichtung weisend, an den Längsträgern fixiert sein.

Bevorzugt umfassen die Längsträger jeweils ein Profil- oder Schienenelement mit in Längsrichtung zumindest im Wesentlichen konstanter Querschnittsform.

Die Längsträger können ein Querschnittsprofil aufweisen, das einen zumindest im Wesentlichen geraden Schenkel umfasst, an dem die Querträger fixierbar, insbesondere festklemmbar sind.

Eine solche Ausgestaltung der Längsträger ermöglicht es, die Aufnahmen im nicht fixierten Zustand nach Art eines Schlittens in Längsrichtung entlang der Längsträger zu verschieben, um auf diese Weise eine jeweilige Längsposition der Aufnahme und folglich des jeweiligen Förderbandabschnitts auf einfache Weise einzustellen. Wenn - wie eingangs bereits erwähnt - gemäß einer bevorzugten Weiterbildung mit den Querträgern zusammenwirkende Stützflächen der Längsträger nicht beide horizontal verlaufen, sondern beispielsweise jeweils zur Seite nach außen abfallen, ergibt sich hieraus der weitere Vorteil, dass die Querträger im noch nicht fixierten Zustand nicht ohne weiteres von selbst in Querrichtung von den Längsträger abrutschen können.

Wenn eine Querverstellbarkeit nicht erforderlich ist, kann auch durch eine andere Ausgestaltung der zusammenwirkenden Stützflächen eine in Querrichtung gesicherte Auflage der Querträger auf den Längsträgern realisiert werden, beispielsweise durch eine in Querrichtung wirksame Formschlussverbindung.

Bevorzugt sind die Längsträger an mehreren in Längsrichtung beabstandeten Stützen der Basis befestigt, die sich zumindest ungefähr bis in Höhe der Querträger oder von Unterteilen der Querträger erstrecken und in Längsrichtung versetzt zu den Querträgern angeordnet sind.

Dabei kann vorgesehen sein, dass zur Befestigung der Längsträger an den Stützen dienenden Befestigungsabschnitte der Stützen von außen durch die Längsträger verdeckt sind. Eine solche Anordnung führt nicht nur zu einem ansprechenden äußeren Erscheinungsbild, sondern reduziert Verschmutzungen der innen liegenden Befestigungsbereiche zwischen den Stützen und den Längsträgern durch äußere Einflüsse.

Des Weiteren kann vorgesehen sein, dass alle Aufnahmen gemeinsam durch Verstellen der Längsträger relativ zu der Basis, insbesondere durch Verschwenken um eine Längsachse, um eine Querachse und/oder um eine Vertikalachse, zwischen einer Betriebsstellung und einer Wartungs- und/oder Reinigungsstellung bewegbar sind. Hierdurch kann ausgenutzt werden, dass mit den Längsträgern und an diesen fixierten Aufnahmen insgesamt ein stabiles Tragwerk vorhanden ist, welches als Ganzes relativ zu dem Gestell bewegt werden kann. Durch Verschwenken dieses Tragwerks kann Zugang zu jenem Bereich der Basis erlangt werden, der sich bei in Betriebsstellung befindlicher Förderstrecke unterhalb der Förderstrecke befindet.

Vorzugsweise sind die Förderbandabschnitte jeweils als eine Förderbandkassette ausgebildet, die als Ganzes an der Aufnahme anbringbar und von der Aufnahme abnehmbar ist.

Vorzugsweise weisen die Förderbandabschnitte, insbesondere die Förderbandkassetten, jeweils einen integrierten Bandantrieb auf. Der integrierte Bandantrieb kann beispielsweise einen in die jeweilige Antriebswelle eingesetzten Rohrmotor umfassen. Im Hinblick auf die anspruchsvollen Arbeitsumgebungen bei der Verarbeitung von Lebensmittelprodukten stehen hierfür z.B. Edelstahlmotoren zur Verfügung, die insbesondere durch eine Edelstahlkapselung vor äußeren Einflüssen, wie insbesondere Wärme und Feuchtigkeit, geschützt sind.

Ein Vorteil der integrierten Bandantriebe ist, dass für deren Betrieb erforderliche, insbesondere elektrotechnische Komponenten nicht in einem Gehäuse oder Gestell unmittelbar unterhalb der Förderstrecke angeordnet zu werden brauchen. Es ist lediglich erforderlich, die Förderbandabschnitte an Versorgungs- und Steuerleitungen anzuschließen. Die entsprechenden Versorgungs- und Steuereinheiten können entfernt von der Förderstrecke angeordnet sein.

Vorzugsweise verläuft die Förderstrecke der Fördereinrichtung in genau einer Förderebene.

Die Erfindung wird im Folgenden beispielhaft unter Bezugnahme auf die Figuren beschrieben. Es zeigen:
- Fig. 1: eine perspektivische Ansicht einer erfindungsgemäßen Fördereinrichtung von einer Längsseite aus gesehen,
- Fig. 2: die Fördereinrichtung von Fig. 1 in einer perspektivischen Ansicht von der anderen Längsseite aus gesehen,
- Fig. 3: in einer vergrößerten Darstellung eine Aufnahme mit Förderbandkassette der Fördereinrichtung von Fig. 2,
- Fig. 4 und 5: zwei mögliche Ausführungsbeispiele einer Aufnahme mit Förderbandkassette in einer Ansicht in Förderrichtung, und
- Fig. 6 bis 8: jeweils schematisch verschiedene Möglichkeiten zum Verschwenken der gesamten Förderstrecke relativ zu der Basis einer erfindungsgemäßen Fördereinrichtung.

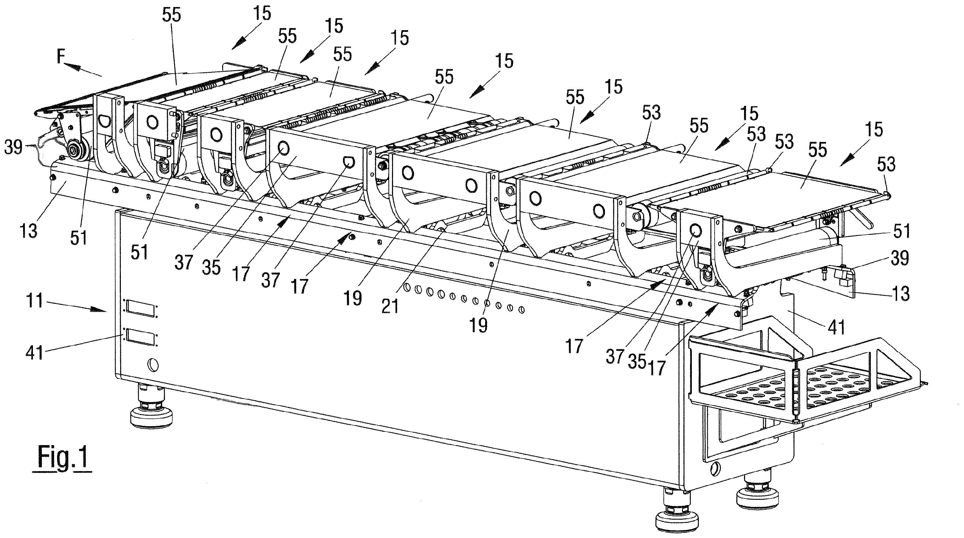

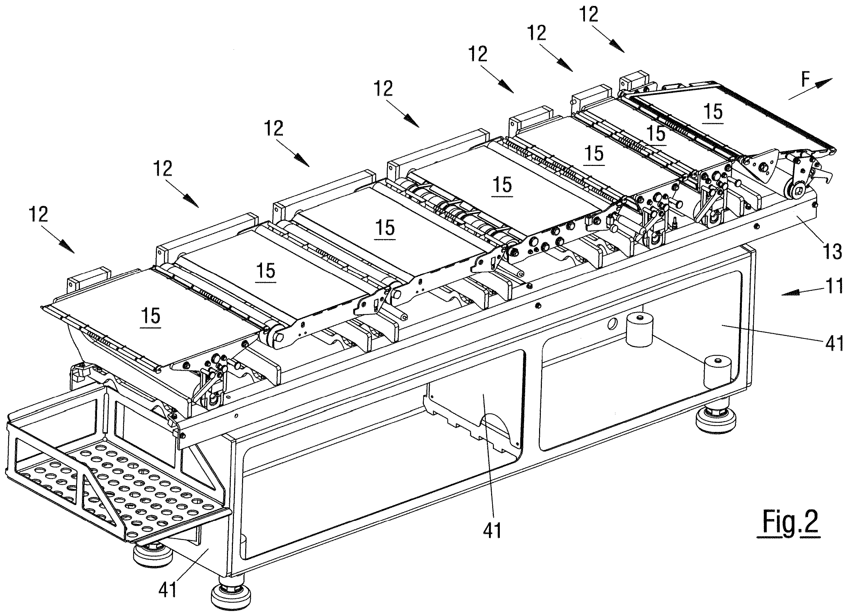

Die in den Fig. 1 und 2 jeweils perspektivisch als Ganzes dargestellte erfindungsgemäße Fördereinrichtung umfasst eine am Boden abgestützte Basis 11 in Form eines Gehäuses, an dessen Oberseite zwei parallel mit Abstand zueinander angeordnete, in einer im Folgenden auch als Längsrichtung bezeichneten Förderrichtung F verlaufende Längsträger 13 in Form eines Winkelprofils angeordnet sind.

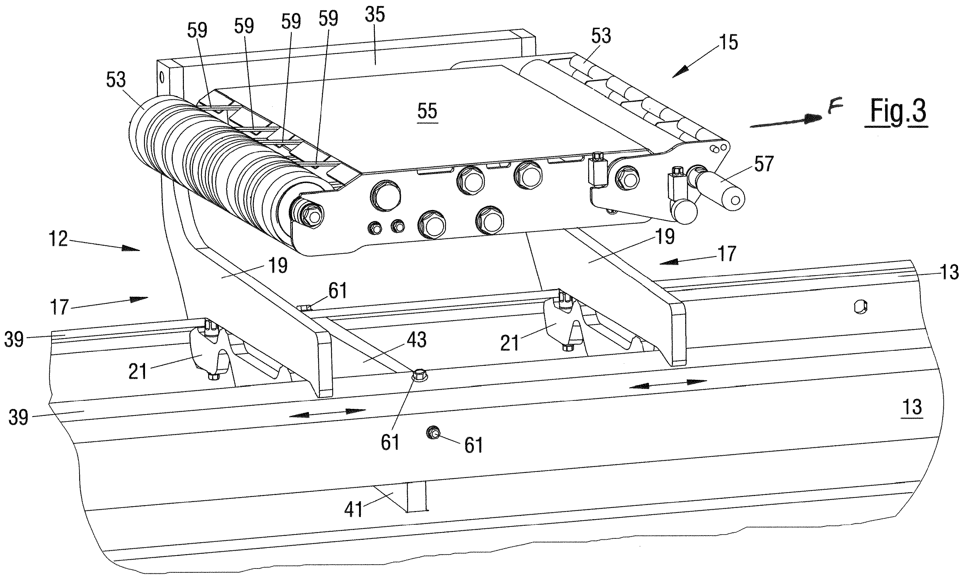

Getragen werden die Profile 13 nicht unmittelbar von dem kastenartigen Gehäuse des Gestells 11, sondern von in diesem Ausführungsbeispiel drei in Längsrichtung mit Abstand voneinander angeordneten Stützen 41 (vgl. auch Fig. 3, 4 und 5). Die Stützen 41 erstrecken sich jeweils mit einem Befestigungsabschnitt 43 bis in Höhe der Längsträger 13, die von außen auf diese Befestigungsabschnitte 43 geschraubt sind, sodass die Befestigungsabschnitte 43 durch die Winkelprofile 13 von außen abgedeckt sind.

Die Förderstrecke der Fördereinrichtung wird von mehreren in Längsrichtung hintereinander angeordneten Förderbandkassetten 15 gebildet, die zur besseren Veranschaulichung des Aufbaus in allen Figuren ohne die umlaufenden Förderbänder dargestellt sind.

Jeder Kassette 15 ist eine Aufnahme 12 zugeordnet. Die Aufnahmen 12 umfassen jeweils zwei baugleiche Querträger 17 in L-Form, zwischen denen an einer Seite ein quaderförmiges Abstandselement 35 befestigt ist. Hierdurch besitzt jede Aufnahme 12 eine stabile, gabelartige Struktur, die nach unten offen ist.

In den Fig. 1 und 2 ist jeweils an der in Förderrichtung gesehen zweiten Aufnahme ein Querträger 17 nicht dargestellt, um die Anordnung der Förderbandkassette 15 an der Aufnahme 12 besser zu veranschaulichen.

Den Fig. 1 und 2 ist zu entnehmen, dass die einzelnen Förderabschnitte 12, 15, also die jeweils eine Aufnahme 12 mit zwei Querträgern 17 und Abstandselement 35 sowie eine Förderbandkassette 15 umfassenden Einheiten, sich sowohl hinsichtlich ihrer Funktionalität als auch ihrer Länge in Förderrichtung voneinander unterscheiden können.

Vergleichsweise lange Fördereinheiten sind mit entsprechend langen Abstandselementen 35 versehen, wobei diese vergleichsweise langen Abstandselemente 35 jeweils zwei Haltedorne 37 aufweisen, die jeweils an ihrem einen Ende mit dem jeweiligen Abstandselement 35 fest verbunden sind und zur anderen Seite hin frei auskragen.

Die relativ kürzeren Fördereinheiten sind mit entsprechend kürzeren Abstandselementen 35 versehen, die jeweils nur einen Haltedorn 37 tragen.

Die Förderbandkassetten 15 sind jeweils von der Zugangs- oder Bedienseite her auf die Haltedorne 37 aufgesteckt und durch geeignete Sicherheitsmittel wie beispielsweise Schrauben oder Stifte an den freien Enden der Haltedorne 37 gesichert.

Wenn - wie bei den relativ langen Fördereinheiten - mehrere Haltedorne 37 vorgesehen sind, dann ist hierdurch die Orientierung der Förderbandkassette 15 relativ zu dem Abstandselement 35 und folglich zu den jeweiligen Querträgern 17 festgelegt. Die Orientierung der Förderbandkassetten 15 und folglich von an der Oberseite vorhandenen Auflageflächen 55 für die hier nicht dargestellten Förderbänder relativ zu dem Gestell 11 ist folglich durch die Lage der Querträger 17 relativ zu den Längsträgern 13 bestimmt.

Wenn die jeweilige Fördereinheit lediglich einen einzigen Haltedorn 37 umfasst, dann dient dieser Haltedorn 37 gleichzeitig als Schwenklager für die betreffende Förderbandkassette 15, um die Neigung der Förderfläche wie jeweils gewünscht einstellen zu können. Eine jeweils eingestellte Neigung der Förderfläche kann fixiert werden, indem die Förderbandkassette 15 an dem Haltedorn 37, auf den sie aufgesteckt ist, durch geeignete Mittel festgestellt wird.

Die Förderbandkassetten 15 sind jeweils mit einem eigenen, integrierten Antrieb für die Förderbänder versehen. Bei den vergleichsweise langen Förderbandkassetten 15 können die Bandantriebe jeweils in Form eines als Rohrmotor ausgebildeten Elektromotors vorgesehen sein, der in eine der von Walzen bzw. Rollen gebildeten Umlenkungen für das Förderband integriert ist.

Dies ist dann nicht möglich, wenn die Umlenkungen zur Optimierung der Bandübergänge bzw. zur Ankoppelung der Fördereinrichtung an vorgeschaltete oder nachgeschaltete Fördereinrichtungen einen vergleichsweise kleinen Durchmesser aufweisen, wie es in dem dargestellten Ausführungsbeispiel insbesondere, aber nicht ausschließlich, bei den vergleichsweise kurzen Förderbandeinheiten mit lediglich einem einzigen Haltedorn 37 der Fall ist. Eine Aufnahme 12 mit lediglich einem einzigen Haltedorn 37, deren Förderbandkassette 15 gleichwohl eine relativ lange Förderstrecke aufweist, ist bei der eingangsseitigen, in Fig. 1 also rechten Fördereinheit vorgesehen.

Bei diesen Fördereinheiten ist der Antriebsmotor 51 entweder mittig zwischen den beiden Querträgern 17 vergleichsweise weit unten, nämlich direkt oberhalb der beiden Längsträger 13, oder-wie bei der ausgangsseitigen, in Fig. 1 also linken Fördereinheit - außerhalb der beiden Querträger 17, aber wiederum relativ weit unten direkt oberhalb der beiden Längsträger 13 angeordnet. Eine derartige Anordnung des Bandantriebs erfordert eine andere Führung des umlaufenden Förderbandes. Denn das Förderband muss hier nicht nur über die endseitigen Umlenkungen, die in Höhe der durch die Förderfläche des Förderbandes definierten Förderebene liegen, sondern zusätzlich über den tiefer liegenden Antriebsmotor 51 geführt werden.

Was die übrigen Fördereinheiten anbetrifft, so ist den Fig. 1 und 2 (und insbesondere auch der Fig. 3) zu entnehmen, dass die Förderbandkassetten 15 jeweils eingangsseitig eine Umlenkung 53 mit relativ großem Durchmesser aufweisen, sodass darin - wie erwähnt - ein als Bandantrieb dienender Rohrmotor untergebracht werden kann. Ausgangsseitig sind die Förderbandkassetten 15 jeweils mit einer Umlenkung 53 versehen, die einen relativ kleinen Durchmesser aufweist und folglich mit der sich anschließenden, einen größeren Durchmesser aufweisenden Umlenkung der nachfolgenden Förderbandkassette 15 einen optimierten Bandübergang mit minimalem Spalt bilden kann.

Fig. 3 zeigt eine Fördereinheit mit zwei Querträgern 17 und mit einer auf die nicht dargestellten Haltedorne aufgesteckten Förderbandkassette 15, die eingangsseitig eine Bandumlenkung 53 mit relativ großem Durchmesser und ausgangsseitig eine Bandumlenkung 53 mit relativ kleinem Durchmesser besitzt. Mittels eines Hebels 57 kann die ausgangsseitige Bandumlenkung 53 derart relativ zu einem Rahmen der Kassette 15 bewegt werden, dass das hier nicht dargestellte Förderband entweder entspannt oder gespannt wird. Folglich ist es nicht erforderlich, zum Auswechseln oder Reinigen des Förderbandes die Kassette 15 von der Aufnahme 12 abzunehmen. Vielmehr genügt es, die Bandspannung zu lösen und das Band zur Seite hin von der Kassette 15 abzunehmen.

Die in Fig. 3 gezeigte Förderbandkassette 15 ist mehrspurig ausgebildet und umfasst mehrere einzeln und unabhängig voneinander angetriebene Förderspuren. Hierzu umfasst die Förderbandkassette 15 mehrere, die eingangsseitige Umlenkung 53 an in Querrichtung beabstandeten Stellen umschlingende Antriebsriemen, die zu mehreren, nicht dargestellten, unterhalb der Auflage 55 angeordneten Antriebsmotoren führen, welche jeweils die betreffende eingangsseitige Umlenkung 53 und somit das betreffende Förderband über die Antriebsriemen 59 antreiben. Diese Ausführungsform zeigt, dass es nicht erforderlich ist, den Bandantrieb in die Umlenkung 53 zu integrieren, wie es vorstehend als eine alternative Möglichkeit für eine Integration des Bandantriebs erläutert worden ist. Generell kann folglich bei einer Mehrspurvariante eines Förderbandabschnitts 15 vorgesehen sein, dass die einzelnen, jeweils einer Spur zugeordneten Antriebsmotoren unterhalb der von den Förderbändern gebildeten Auflage angeordnet, d.h. nicht z.B. als Rohrmotoren ausgebildet sind, wie es an anderer Stelle als eine alternative Ausgestaltung erwähnt ist.

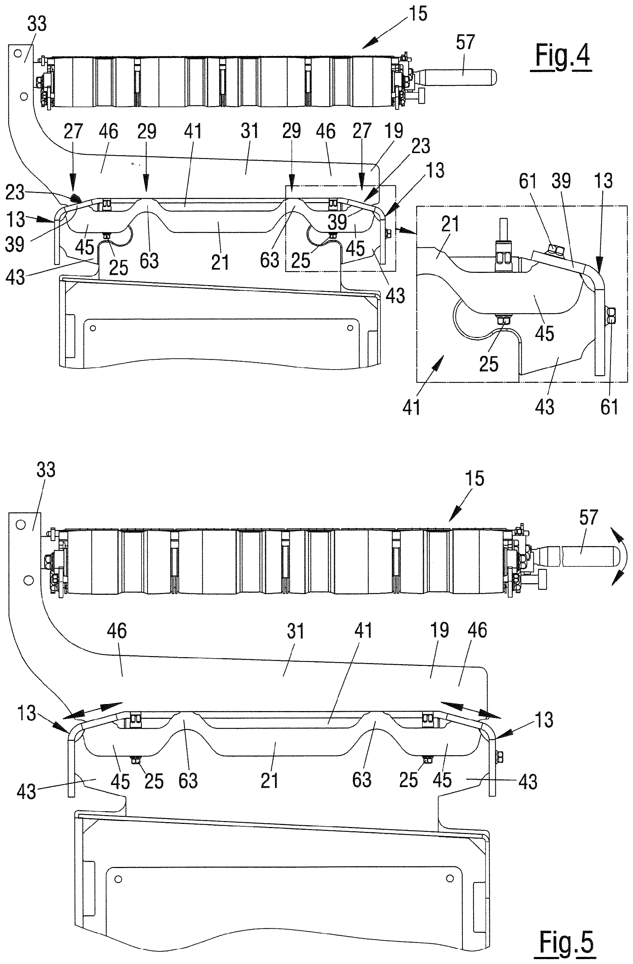

Wie nachstehend näher in Verbindung mit den Fig. 4 und 5 beschrieben wird, sind die Querträger 17 jeweils mehrteilig ausgebildet. Jeder Querträger 17 umfasst ein L-förmiges Oberteil 19 sowie ein Unterteil 21. Im Bereich der Längsträger 13 bilden jeweils ein Oberteil 19 und das zugeordnete Unterteil 21 eine Klemme, mit welcher der obere Schenkel 39 des den betreffenden Längsträger 13 bildenden Winkelprofils eingeklemmt wird, um auf diese Weise die Querträger 17 an den Längsträgern 13 zu fixieren.

Fig. 3 zeigt außerdem eine in Längsrichtung in dem Bereich zwischen den beiden Querträgern 17 angeordnete Stütze 41 zum Tragen der Längsträger 13. Mittels Befestigungsschrauben 61 sind die Längsträger 13 an den in Höhe der Unterteile 21 der Querträger 17 liegenden Befestigungsabschnitten 43 der Stützen 41 fixiert.

Die Fig. 4 und 5 zeigen insbesondere das Querschnittsprofil der Längsträger 13. Das Profil ist etwa V-förmig mit einem Öffnungswinkel von etwa 105° zwischen den beiden Schenkeln ausgebildet. Der äußere, untere Schenkel ist vertikal orientiert, sodass der innere, obere Schenkel 39 gegenüber der Horizontalen leicht geneigt ist und seitlich von innen nach außen abfällt.

Folglich stellen die beiden Längsträger 13 über ihre oberen Schenkel 39 zwei zueinander gegensinnig relativ zur Horizontalen geneigte, ebene Schrägflächen bereit. Diese Schrägflächen dienen als Stützflächen 23 für kooperierende Stützflächen an der Unterseite eines im Wesentlichen horizontal verlaufenden Stützabschnitts 31 des L-förmigen Oberteils 19 des Querträgers 17.

Auf diesen Stützflächen 23 der Längsträger 13 ruht die betreffende Fördereinheit aus Förderbandkassette 15 und Querträgern 17, die jeweils zusätzlich zu dem bereits erwähnten, L-förmigen Oberteil 19 ein Unterteil 21 umfassen.

Die hier nicht dargestellten Haltedorne, auf welche die Förderbandkassette 15 aufgesteckt ist, sind an einem nach oben von dem Stützabschnitt 31 des Oberteils 19 abstehenden Tragabschnitt 33 angebracht.

Jedes Oberteil 19 und das zugehörige Unterteil 21 bilden gemeinsam jeweils im Bereich des oberen Schenkels 39 des betreffenden Längsträgers 13 eine Klemmstelle 27. Jeder Klemmstelle 27 ist eine in Querrichtung nach innen mit Abstand angeordnete Abstützstelle 29 zugeordnet, an welcher eine am Unterteil 21 ausgebildete Erhöhung 63 an der Unterseite des Stützabschnitts 31 des Oberteils 19 anliegt. Die Erhöhungen 63 sind jeweils auf ihrer dem Oberteil 19 zugewandten Seite abgerundet, sodass sich Oberteil 19 und Unterteil 21 an den beiden Abstützstellen 29 jeweils nur im Wesentlichen linienförmig berühren.

In Querrichtung zwischen jedem Paar von Klemmstelle 27 und zugehöriger Abstützstelle 29 ist eine Spannschraube 25 wirksam, die durch das Unterteil 21 hindurch geführt und mit dem Oberteil 19 verschraubt wird, um das Oberteil 19 und das Unterteil 21 miteinander zu verspannen. Durch diesen Spannvorgang werden der betreffende Klemmabschnitt 45 des Unterteils 21 und der zugehörige Klemmabschnitt 46 des Oberteils 19 um das gemeinsame, von der Abstützstelle 29 gebildete Widerlager aufeinander zubewegt. Hierdurch bilden die beiden Klemmabschnitte 45, 46 zusammen eine Klemme, mittels welcher der Querträger 17 an dem Schenkel 39 des betreffenden Längsträgers 13 festgeklemmt wird.

Einen vergrößerten Ausschnitt des in Fig. 4 rechten Klemmbereiches ohne das Oberteil 19 zeigt die Detaildarstellung in Fig. 4. Die Befestigungsschrauben 61 liegen in Längsrichtung hinter der von dem Unterteil 21 und dem Oberteil 19 definierten Ebene, nämlich in der durch die Stütze 41 definierten Ebene, und dienen dazu, den Längsträger 13 mit dem Befestigungsabschnitt 43 der Stütze 41 zu verschrauben. Diesbezüglich wird auch auf die vorstehenden Ausführungen zu Fig. 3 verwiesen.

Die Ausführungsbeispiele der Fig. 4 und 5 unterscheiden sich dadurch voneinander, dass im Ausführungsbeispiel der Fig. 4 der Befestigungsabschnitt 43 nicht einstückig mit der Stütze 41 ausgebildet ist, sondern diese beiden Bauteile durch eine in der Ebene der Stütze 41 wirksame Formschlussverbindung miteinander verbunden sind. Eine alternative Ausgestaltung zeigt Fig. 5, bei welcher die Befestigungsabschnitte 43 einstückig mit der Stütze 41 ausgebildet sind.

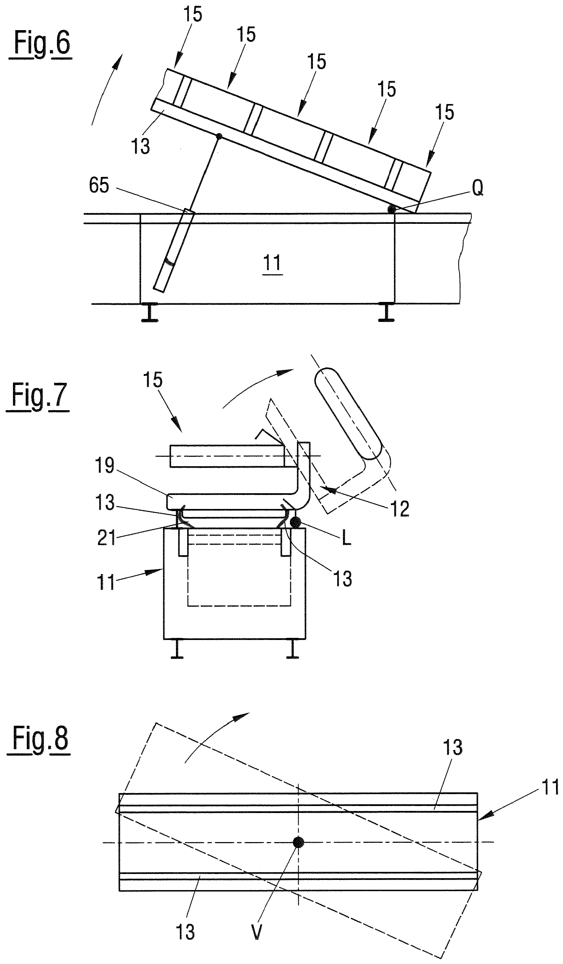

Die Fig. 6, 7 und 8 zeigen jeweils schematisch verschiedene Möglichkeiten, die gesamte Förderstrecke aus Längsträgern 13 und Aufnahmen 12 mit angebrachten Förderbandkassetten 15 als Ganzes relativ zu dem Gestell 11 zu bewegen.

Gemäß Fig. 6 ist die Förderstrecke mittels einer Hebeeinrichtung 65 um eine in Querrichtung verlaufende Achse Q verschwenkbar. Fig. 7 zeigt eine Variante, in welcher die Förderstrecke um eine sich in Förderrichtung erstreckende Längsachse L verschwenkbar ist, die im Bereich des unteren Endes des unteren Schenkels des Winkelprofils verläuft, welches den in Fig. 7 rechten Längsträger 13 bildet. In der schematischen Draufsicht der Fig. 8 ist zu erkennen, dass bei dieser Ausführungsform die Förderstrecke, von der lediglich die Längsträger 13 dargestellt sind, um eine Vertikalachse V verschwenkt werden kann.

Sowohl in Fig. 7 als auch in Fig. 8 ist die aus der Betriebsstellung heraus geschwenkte Stellung der Förderstrecke jeweils durch gestrichelte Linien angedeutet.

Ein Vorteil der erfindungsgemäßen Fördereinrichtung ist, dass sie in unmittelbarer Nähe einer Verpackungsmaschine angeordnet werden kann. Dabei kann vorgesehen sein, dass ein Gestell der Verpackungsmaschine einen Längsträger und/oder die Querträger der Fördereinrichtung bilden kann. Hierdurch können die Verpackungsmaschine und die erfindungsgemäße Fördereinrichtung eine integrierte Einheit bilden.

Beispielsweise kann die Basis der Fördereinrichtung direkt an dem Gestell einer Verpackungsmaschine fixiert werden. Des Weiteren ist es möglich, auf eine Basis 11, wie sie in den vorstehend erläuterten Figuren dargestellt ist, zu verzichten und die beiden Längsträger 13 direkt an dem Gestell der Verpackungsmaschine anzubringen. Alternativ kann die Fördereinrichtung ein eigenes Gestell aufweisen und entweder neben der Verpackungsmaschine stehen oder die Verpackungsmaschine brückenartig übergreifen.

Des Weiteren ist es erfindungsgemäß möglich, die in Förderrichtung vorderste Fördereinheit unmittelbar vor der Verpackungsmaschine in Form eines Einlegebandes vorzusehen, d.h. eine erfindungsgemäße Fördereinrichtung kann die Funktion eines so genannten Einlegers übernehmen.

Generell kann die die Längsträger tragende Basis ganz oder teilweise eine eigene Basis der Fördereinrichtung sein, alternativ aber auch beispielsweise das Gestell oder das Gehäuse einer anderen Komponente einer Verarbeitungslinie einschließlich einer Verpackungsmaschine bilden.

Die Erfindung betrifft folglich auch eine Fördereinrichtung mit wenigstens zwei Längsträgern sowie mehreren von den Längsträgern getragenen Aufnahmen zur Abstützung der Förderbandabschnitte, und somit eine Fördereinheit ohne eine am Boden abgestützte Basis. Eine solche Fördereinheit kann - wie vorstehend erläutert - an der Basis einer anderen Einrichtung angebracht werden.

### Bezuqszeichenliste

- 11: Basis
- 12: Aufnahme
- 13: Längsträger
- 15: Förderbandabschnitt, Förderbandkassette
- 17: Querträger
- 19: Oberteil
- 21: Unterteil
- 23: Stützfläche des Längsträgers
- 25: Spanneinrichtung, Spannschraube
- 27: Klemmstelle
- 29: Abstützstelle
- 31: Stützabschnitt
- 33: Tragabschnitt
- 35: Abstandselement
- 37: Halter
- 39: Schenkel
- 41: Stütze
- 43: Befestigungsabschnitt
- 45: Klemmabschnitt
- 46: Klemmabschnitt
- 51: Motor
- 53: Umlenkung
- 55: Auflagefläche
- 57: Griff
- 59: Antriebsriemen
- 61: Befestigungsschraube
- 63: Erhöhung
- 65: Hebeeinrichtung

- F: Förderrichtung
- L: Längsachse
- Q: Querachse
- V: Vertikalachse

## Patentansprüche

1. Fördereinheit mit
- wenigstens zwei sich in einer Längsrichtung erstreckenden und in Querrichtung voneinander beabstandeten Längsträgern (13), und
- einer Mehrzahl von in Längsrichtung hintereinander angeordneten, von den Längsträgern (13) getragenen Aufnahmen (12), an denen individuell anbringbare und abnehmbare Förderbandabschnitte (15) abgestützt sind, die zusammen eine in Längsrichtung verlaufende Förderstrecke bilden,
**dadurch gekennzeichnet, dass** die Aufnahmen (12) für die Förderbandabschnitte (15) asymmetrisch ausgebildet sind und jeweils eine Tragseite zur Kraftableitung in die Längsträger (13) sowie eine Zugangsseite umfassen, über welche der jeweilige Förderbandabschnitt (15) seitlich anbringbar und abnehmbar ist.

2. Fördereinrichtung mi einer Fördereinheit nach Anspruch 1 und mit
- einer am Boden abgestützten Basis (11), insbesondere einem Gestell oder einem Gehäuse,
und wobei die Längsträgern (13) von der Basis (11) getragen sind.

3. Fördereinheit nach Anspruch 1 oder Fördereinrichtung nach Anspruch 2, wobei die Aufnahmen (12) jeweils wenigstens zwei in Längsrichtung beabstandete, den Abstand zwischen den Längsträgern (13) in Querrichtung überbrückende Querträger (17) umfassen, und/oder wobei Querträger (17) der Aufnahmen (12) jeweils an den Längsträgern (13) lösbar fixiert sind.

4. Fördereinheit nach Anspruch 1 oder 3 oder Fördereinrichtung nach Anspruch 2 oder 3, wobei Querträger (17) der Aufnahmen (12) jeweils im Bereich der Längsträger (13) als lösbare Klemme zur Fixierung an den Längsträgern (13) ausgebildet sind, und/oder wobei Querträger (17) der Aufnahmen (12) jeweils ein Oberteil (19) und ein dem Oberteil (19) zugeordnetes Unterteil (21) umfassen, die jeweils im Bereich der Längsträger (13) eine Klemme zur Fixierung an einem jeweiligen Längsträger (13) bilden.

5. Fördereinheit nach Anspruch 1 oder nach einem der Ansprüche 3 bis 4, oder Fördereinrichtung nach einem der Ansprüche 2 bis 4, wobei Querträger (17) der Aufnahmen (12) entlang der Längsträger (13) verstellbar sind, insbesondere stufenlos, und/oder wobei Querträger (17) der Aufnahmen (12) in einer senkrecht zur Längsrichtung verlaufenden Ebene relativ zu den Längsträgern (13) quer verstellbar sind, insbesondere stufenlos, und/oder wobei jeweils mit Querträgern (17) der Aufnahmen (12) zusammenwirkende Stützflächen (23) der Längsträger (13) zur Horizontalen geneigt sind, insbesondere jeweils zur Seite nach außen abfallen.

6. Fördereinheit nach Anspruch 1 oder nach einem der Ansprüche 3 bis 5, oder Fördereinrichtung nach einem der Ansprüche 2 bis 5,
wobei von Querträgern (17) der Aufnahmen (12) jeweils gebildete Klemmen jeweils eine Spanneinrichtung (25) umfassen,
insbesondere wobei die Klemmen jeweils von einem Oberteil (19) und einem dem Oberteil (19) zugeordneten Unterteil (21) des jeweiligen Querträgers (17) gebildet sind, die zum Einklemmen des jeweiligen Längsträgers (13) mittels einer Spanneinrichtung (25) miteinander verspannbar sind.

7. Fördereinheit nach Anspruch 1 oder nach einem der Ansprüche 3 bis 6, oder Fördereinrichtung nach einem der Ansprüche 2 bis 6, wobei jeweils von einem Oberteil (19) und einem dem Oberteil (19) zugeordneten Unterteil (21) von Querträgern (17) der Aufnahme (12) gebildete Klemmen jeweils eine Klemmstelle (27), an welcher der Längsträger (13) zwischen dem Oberteil (19) und dem Unterteil (21) einklemmbar ist, und eine von der Klemmstelle (27) in Querrichtung beabstandete Abstützstelle (29) umfassen, an welcher das Oberteil (19) und das Unterteil (21) aneinander abstützbar sind, und wobei zwischen der Klemmstelle (27) und der Abstützstelle (29) eine Spanneinrichtung (25) wirksam ist, mit der das Oberteil (19) und das Unterteil (21) miteinander verspannbar sind.

8. Fördereinheit nach Anspruch 1 oder nach einem der Ansprüche 3 bis 7, oder Fördereinrichtung nach einem der Ansprüche 2 bis 7,
wobei Querträger (17) der Aufnahmen (12) oder Oberteile (19) der Querträger (17) jeweils einen sich in Querrichtung erstreckenden Stützabschnitt (31) zur Abstützung an den Längsträgern (13) sowie einen sich von dem Stützabschnitt (31) nach oben erstreckenden Tragabschnitt (33) umfassen,
insbesondere wobei der Tragabschnitt (33) im Bereich eines Endes des Stützabschnitts (31) angeordnet ist.

9. Fördereinheit nach Anspruch 1 oder nach einem der Ansprüche 3 bis 8, oder Fördereinrichtung nach einem der Ansprüche 2 bis 8, wobei Querträger (17) der Aufnahmen (12) oder Oberteile (19) der Querträger (17) jeweils in Längsrichtung gesehen L-förmig ausgebildet sind, und/oder wobei die Förderbandabschnitte (15) jeweils von einem sich in Längsrichtung zwischen Querträgern (17) der Aufnahme (12) erstreckenden, mit den Querträgern (17) verbundenen Abstandselement (35) getragen sind.

10. Fördereinheit nach Anspruch 1 oder nach einem der Ansprüche 3 bis 9, oder Fördereinrichtung nach einem der Ansprüche 2 bis 9,
wobei die Aufnahmen (12) jeweils wenigstens einen an einer Seite gehaltenen und zur anderen Seite hin frei auskragenden Halter (37) umfassen, über den ein jeweiliger Förderbandabschnitt (15) mit der Aufnahme (12) koppelbar ist, wobei bevorzugt der Halter (37) an einem Abstandselement (35) zwischen Querträgern (17) der Aufnahme (12) angebracht ist,
insbesondere wobei der Förderbandabschnitt (15) durch seitliches Aufschieben oder Aufstecken auf den Halter (37) mit der Aufnahme (12) koppelbar ist, und/oder wobei der Halter (37) als Dorn oder Stab ausgebildet ist.

11. Fördereinheit nach Anspruch 1 oder nach einem der Ansprüche 3 bis 10, oder Fördereinrichtung nach einem der Ansprüche 2 bis 10, wobei Querträger (17) der Aufnahmen (12) oder Oberteile (19) und den Oberteilen (19) jeweils zugeordnete Unterteile (21) der Querträger (17) jeweils aus einem Flachmaterial, insbesondere durch Ausschneiden oder Ausstanzen, hergestellt und stehend, mit ihren Flachseiten in Längsrichtung weisend an den Längsträgern (13) fixiert sind.

12. Fördereinheit nach Anspruch 1 oder nach einem der Ansprüche 3 bis 11, oder Fördereinrichtung nach einem der Ansprüche 2 bis 11,
wobei die Längsträger (13) ein Querschnittsprofil aufweisen, das einen zumindest im Wesentlichen geraden Schenkel (39) umfasst, an dem die Querträger (17) fixierbar, insbesondere festklemmbar sind, und/oder wobei die Längsträger (13) an mehreren in Längsrichtung beabstandeten Stützen (41) der Basis (11) befestigt sind, die sich zumindest ungefähr bis in Höhe von Querträgern (17) der Aufnahmen (12) oder von Unterteilen (21) der Querträger (17) erstrecken und in Längsrichtung versetzt zu den Querträgern (17) angeordnet sind,
insbesondere wobei zur Befestigung der Längsträger (13) an den Stützen (41) dienende Befestigungsabschnitte (43) der Stützen (41) von außen durch die Längsträger (13) verdeckt sind.

13. Fördereinheit nach Anspruch 1 oder nach einem der Ansprüche 3 bis 12, oder Fördereinrichtung nach einem der Ansprüche 2 bis 12, wobei alle Aufnahmen (12) gemeinsam durch Verstellen der Längsträger (13) relativ zu der Basis (11), insbesondere durch Verschwenken um eine Längsachse (L), um eine Querachse (Q) und/oder um eine Vertikalachse (V), zwischen einer Betriebsstellung und einer Wartungs- und/oder Reinigungsstellung bewegbar sind.

14. Fördereinheit nach Anspruch 1 oder nach einem der Ansprüche 3 bis 13, oder Fördereinrichtung nach einem der Ansprüche 2 bis 13, wobei die Förderbandabschnitte jeweils als eine Förderbandkassette (15) ausgebildet sind, die als Ganzes an der Aufnahme (12) anbringbar und von der Aufnahme (12) abnehmbar ist, und/oder wobei die Förderbandabschnitte (15) jeweils einen integrierten Bandantrieb aufweisen.

## Claims

1. A conveying unit comprising
- at least two longitudinal members (13) which extend in a longitudinal direction and which are spaced apart from one another in a transverse direction; and
- a plurality of receivers (12) which are arranged behind one another in the longitudinal direction, which are carried by the longitudinal members (13) and at which conveyor belt sections (15) are supported which are individually attachable and removable and which together form a conveying path extending in the longitudinal direction,
**characterized in that** the receivers (12) for the conveyor belt sections (15) are asymmetrical and each comprise a carrier side for force transfer into the longitudinal members (13) and an access side via which the respective conveyor belt section (15) is laterally attachable and removable.

2. A conveying device comprising a conveying unit in accordance with claim 1; and
- a base (11), in particular a rack or a housing, supported on the ground,
and wherein the longitudinal members (13) are carried by the base (11).

3. A conveying unit in accordance with claim 1 or a conveying device in accordance with claim 2,
wherein the receivers (12) each comprise at least two transverse members (17) which are spaced apart in the longitudinal direction and which bridge the spacing between the longitudinal members (13) in the transverse direction, and/or wherein transverse members (17) of the receivers (12) are each releasably fixed to the longitudinal members (13).

4. A conveying unit in accordance with claim 1 or claim 3 or a conveying device in accordance with claim 2 or claim 3,
wherein transverse members (17) of the receivers (12) are each configured in the region of the longitudinal members (13) as releasable clamps for a fixing to the longitudinal members (13), and/or wherein transverse members (17) of the receivers (12) each comprise an upper part (19) and a lower part (21) associated with the upper part (19), said upper part (19) and lower part (21) forming a clamp, in each case in the region of the longitudinal members (13), for a fixing to a respective longitudinal member (13).

5. A conveying unit in accordance with claim 1 or in accordance with one of the claims 3 to 4 or a conveying device in accordance with any one of the claims 2 to 4,
wherein transverse members (17) of the receivers (12) are adjustable, in particular in a continuous manner, along the longitudinal members (13), and/or wherein transverse members (17) of the receivers (12) are transversely adjustable, in particular in a continuous manner, relative to the longitudinal members (13) in a plane extending perpendicular to the longitudinal direction, and/or wherein support surfaces (23) of the longitudinal members (13) which each cooperate with transverse members (17) of the receivers (12) are inclined toward the horizontal and in particular each slope down outwardly to the side.

6. A conveying unit in accordance with claim 1 or in accordance with any one of the claims 3 to 5 or a conveying device in accordance with any one of the claims 2 to 5,
wherein clamps which are each formed by transverse members (17) of the receivers (12) each comprise a bracing device (25),
in particular wherein the clamps are each formed by an upper part (19) and by a lower part (21) of the respective transverse member (17) associated with the upper part (19), said upper part (19) and lower part (21) being able to be braced toward one another by means of a bracing device (25) in order to clamp the respective longitudinal member (13).

7. A conveying unit in accordance with claim 1 or in accordance with any one of the claims 3 to 6 or a conveying device in accordance with any one of the claims 2 to 6,
wherein clamps which are each formed by an upper part (19) and by a lower part (21) of transverse members (17) of the receiver (12) associated with the upper part (19) each comprise a clamping point (27) at which the longitudinal member (13) can be clamped between the upper part (19) and the lower part (21) and a support point (29) which is spaced apart from the clamping point (27) in the transverse direction and at which the upper part (19) and the lower part (21) can be supported at one another, and wherein a bracing device (25) by which the upper part (19) and the lower part (21) can be braced toward another is active between the clamping point (27) and the support point (29).

8. A conveying unit in accordance with claim 1 or in accordance with any one of the claims 3 to 7 or a conveying device in accordance with any one of the claims 2 to 7,
wherein transverse members (17) of the receivers (12) or upper parts (19) of the transverse members (17) each comprise a support section (31) extending in the transverse direction for support at the longitudinal members (13) and a carrier section (33) extending upwardly from the support section (31),
in particular wherein the carrier section (33) is arranged in the region of an end of the support section (31).

9. A conveying unit in accordance with claim 1 or in accordance with any one of the claims 3 to 8 or a conveying device in accordance with any one of the claims 2 to 8,
wherein transverse members (17) of the receivers (12) or upper parts (19) of the transverse members (17) are each L-shaped viewed in the longitudinal direction, and/or wherein the conveyor belt sections (15) are each borne by a spacer element (35) which extends between transverse members (17) of the receiver (12) in the longitudinal direction and which is connected to the transverse members (17).

10. A conveying unit in accordance with claim 1 or in accordance with any one of the claims 3 to 9 or a conveying device in accordance with any one of the claims 2 to 9,
wherein the receivers (12) each comprise at least one holder (37) which is held at one side and which freely projects toward the other side and via which a respective conveyor belt section (15) is couplable to the receiver (12), wherein the holder (37) is preferably attached to a spacer element (35) between transverse members (17) of the receiver (12),
in particular wherein the conveyor belt section (15) is couplable to the receiver (12) by a lateral pushing or plugging onto the holder (37), and/or wherein the holder (37) is configured as a mandrel or as a bar.

11. A conveying unit in accordance with claim 1 or in accordance with any one of the claims 3 to 10 or a conveying device in accordance with any one of the claims 2 to 10,
wherein transverse members (17) of the receivers (12) or upper parts (19) and lower parts (21) of the transverse members (17) respectively associated with the upper parts (19) are each manufactured from a flat material, in particular by a cutting out or a punching out, and are fixed standing upright to the longitudinal members (13) with their flat sides facing in the longitudinal direction.

12. A conveying unit in accordance with claim 1 or in accordance with any one of the claims 3 to 11 or a conveying device in accordance with any one of the claims 2 to 11,
wherein the longitudinal members (13) have a cross-sectional profile which comprises a limb (39) which is at least substantially straight and to which the transverse members (17) can be fixed, in particular fixedly clamped, and/or wherein the longitudinal members (13) are fastened to a plurality of supports (41) of the base (11) which are spaced apart in the longitudinal direction and which extend at least approximately up to the level of transverse members (17) of the receivers (12) or of lower parts (21) of the transverse members (17) and which are arranged offset from the transverse members (17) in the longitudinal direction,
in particular wherein fastening sections (43) of the supports (41) serving for the fastening of the longitudinal members (13) to the supports (41) are covered from the outside by the longitudinal members (13).

13. A conveying unit in accordance with claim 1 or in accordance with any one of the claims 3 to 12 or a conveying device in accordance with any one of the claims 2 to 12,
wherein all the receivers (12) are movable together between an operating position and a servicing and/or cleaning position by an adjustment of the longitudinal members (13) relative to the base (11), in particular by a pivoting about a longitudinal axis (L), about a transverse axis (Q) and/or about a vertical axis (V).

14. A conveying unit in accordance with claim 1 or in accordance with any one of the claims 3 to 13 or a conveying device in accordance with any one of the claims 2 to 13,
wherein the conveyor belt sections are each formed as a conveyor belt unit (15) which is attachable to the receiver (12) and removable from the receiver (12) as a whole, and/or wherein the conveyor belt sections (15) each have an integrated belt drive.

## Revendications

1. Ensemble de transport comprenant
- au moins deux supports longitudinaux (13) s'étendant dans la direction longitudinale et espacés l'un de l'autre dans la direction transversale, et
- une pluralité de logements (12) disposés les uns derrière les autres dans la direction longitudinale et portés par les supports longitudinaux (13), sur lesquels sont supportés des tronçons de bande transporteuse (15) pouvant être montés et retirés individuellement, qui forment conjointement une voie de transport s'étendant dans la direction longitudinale,
**caractérisé en ce que**
les logements (12) pour les tronçons de bande transporteuse (15) sont réalisés de manière asymétrique et présentent chacun un côté porteur pour la dissipation des forces vers les supports longitudinaux (13) ainsi qu'un côté d'accès par lequel le tronçon de bande transporteuse (15) respectif peut être monté et retiré latéralement.

2. Dispositif de transport comprenant un ensemble de transport selon la revendication 1 et comprenant
- une base (11) supportée par le sol, en particulier un bâti ou un boîtier, les supports longitudinaux (13) étant portés par la base (11).

3. Ensemble de transport selon la revendication 1, ou dispositif de transport selon la revendication 2,
dans lequel
les logements (12) comprennent chacun au moins deux supports transversaux (17) espacés dans la direction longitudinale et couvrant la distance entre les supports longitudinaux (13) dans la direction transversale,
et/ou
des supports transversaux (17) des logements (12) sont fixés chacun de manière amovible aux supports longitudinaux (13).

4. Ensemble de transport selon la revendication 1 ou 3, ou dispositif de transport selon la revendication 2 ou 3,
dans lequel, dans la zone des supports longitudinaux (13), des supports transversaux (17) des logements (12) sont réalisés chacun sous forme de pince amovible pour la fixation sur les supports longitudinaux (13),
et/ou
des supports transversaux (17) des logements (12) comprennent chacun une partie supérieure (19) et une partie inférieure (21) associée à la partie supérieure (19), qui forment chacune, dans la zone des supports longitudinaux (13), une pince pour la fixation sur un support longitudinal respectif (13).

5. Ensemble de transport selon la revendication 1 ou selon l'une des revendications 3 à 4, ou dispositif de transport selon l'une des revendications 2 à 4, dans lequel des supports transversaux (17) des logements (12) sont réglables le long des supports longitudinaux (13), en particulier en continu, et/ou
des supports transversaux (17) des logements (12) sont réglables transversalement par rapport aux supports longitudinaux (13) dans un plan perpendiculaire à la direction longitudinale, en particulier en continu,
et/ou
des surfaces d'appui (23) des supports longitudinaux (13) coopérant chacune avec des supports transversaux (17) des logements (12) sont inclinées par rapport à l'horizontale, en particulier descendent chacune vers le côté, vers l'extérieur.

6. Ensemble de transport selon la revendication 1 ou selon l'une des revendications 3 à 5, ou dispositif de transport selon l'une des revendications 2 à 5, dans lequel des pinces respectives formées par des supports transversaux (17) des logements (12) comprennent chacune un moyen de serrage (25), en particulier les pinces sont formées chacune par une partie supérieure (19) et une partie inférieure (21), associée à la partie supérieure (19), du support transversal (17) respectif, qui peuvent être serrées l'une contre l'autre à l'aide du moyen de serrage (25) pour coincer le support longitudinal (13) respectif.

7. Ensemble de transport selon la revendication 1 ou selon l'une des revendications 3 à 6, ou dispositif de transport selon l'une des revendications 2 à 6, dans lequel des pinces respectives formées par une partie supérieure (19) et une partie inférieure (21), associée à la partie supérieure (19), de supports transversaux (17) du logement (12) présentent chacune un point de coincement (27), au niveau duquel le support longitudinal (13) peut être coincé entre la partie supérieure (19) et la partie inférieure (21), et un point d'appui (29) espacé du point de coincement (27) dans la direction transversale, au niveau duquel la partie supérieure (19) et la partie inférieure (21) peuvent s'appuyer l'une contre l'autre, et
un moyen de serrage (25) est actif entre le point de coincement (27) et le point d'appui (29), avec lequel la partie supérieure (19) et la partie inférieure (21) peuvent être serrées l'une contre l'autre.

8. Ensemble de transport selon la revendication 1 ou selon l'une des revendications 3 à 7, ou dispositif de transport selon l'une des revendications 2 à 7, dans lequel des supports transversaux (17) des logements (12) ou des parties supérieures (19) des supports transversaux (17) comprennent chacun(e) une portion d'appui (31) s'étendant dans la direction transversale pour l'appui sur les supports longitudinaux (13) ainsi qu'une portion de support (33) s'étendant vers le haut à partir de la portion d'appui (31),
en particulier, la portion de support (33) est disposée dans la zone d'une extrémité de la portion d'appui (31).

9. Ensemble de transport selon la revendication 1 ou selon l'une des revendications 3 à 8, ou dispositif de transport selon l'une des revendications 2 à 8, dans lequel des supports transversaux (17) des logements (12) ou des parties supérieures (19) des supports transversaux (17) sont chacun(e) en forme de L, vu dans la direction longitudinale,
et/ou
les tronçons de bande transporteuse (15) sont portés chacun par un élément d'écartement (35) s'étendant dans la direction longitudinale entre des supports transversaux (17) du logement (12) et relié aux supports transversaux (17).

10. Ensemble de transport selon la revendication 1 ou selon l'une des revendications 3 à 9, ou dispositif de transport selon l'une des revendications 2 à 9, dans lequel les logements (12) comprennent chacun au moins un élément de maintien (37) retenu d'un côté et faisant librement saillie vers l'autre côté, par l'intermédiaire duquel un tronçon de bande transporteuse (15) respectif peut être couplé au logement (12),
de préférence, l'élément de maintien (37) est monté sur un élément d'écartement (35) entre des supports transversaux (17) du logement (12),
en particulier, le tronçon de bande transporteuse (15) peut être couplé au logement (12) par emboîtement ou enfichage latéral sur l'élément de maintien (37),
et/ou
l'élément de maintien (37) est réalisé sous forme de broche ou de barre.

11. Ensemble de transport selon la revendication 1 ou selon l'une des revendications 3 à 10, ou dispositif de transport selon l'une des revendications 2 à 10,
dans lequel des supports transversaux (17) des logements (12) ou des parties supérieures (19) et des parties inférieures (21), associées respectivement aux parties supérieures (19), des supports transversaux (17) sont fabriqué(e)s chacun(e) à partir d'un matériau plat, en particulier par découpage ou poinçonnage, et sont fixé(e)s debout sur les supports longitudinaux (13), leurs côtés plats étant orientés dans la direction longitudinale.

12. Ensemble de transport selon la revendication 1 ou selon l'une des revendications 3 à 11, ou dispositif de transport selon l'une des revendications 2 à 11,
dans lequel les supports longitudinaux (13) présentent un profil de section transversale qui comprend une branche (39) au moins sensiblement droite sur laquelle les supports transversaux (17) peuvent être fixés, en particulier par coincement,
et/ou
les supports longitudinaux (13) sont fixés sur plusieurs montants (41) de la base (11) espacés dans la direction longitudinale, qui s'étendent au moins approximativement jusqu'à la hauteur de supports transversaux (17) des logements (12) ou de parties inférieures (21) des supports transversaux (17) et sont disposés dans la direction longitudinale en étant décalés par rapport aux supports transversaux (17),
en particulier, des portions de fixation (43) des montants (41), servant à la fixation des supports longitudinaux (13) sur les montants (41), sont cachées de l'extérieur par les supports longitudinaux (13).

13. Ensemble de transport selon la revendication 1 ou selon l'une des revendications 3 à 12, ou dispositif de transport selon l'une des revendications 2 à 12,
dans lequel tous les logements (12) peuvent être déplacés conjointement entre une position de fonctionnement et une position d'entretien et/ou de nettoyage par déplacement des supports longitudinaux (13) par rapport à la base (11), en particulier par pivotement autour d'un axe longitudinal (L), autour d'un axe transversal (Q) et/ou autour d'un axe vertical (V).

14. Ensemble de transport selon la revendication 1 ou selon l'une des revendications 3 à 13, ou dispositif de transport selon l'une des revendications 2 à 13,
dans lequel les tronçons de bande transporteuse sont chacun réalisés sous la forme d'une cassette de bande transporteuse (15) qui, dans son ensemble, peut être montée sur le logement (12) et être retirée du logement (12),
et/ou
les tronçons de bande transporteuse (15) présentent chacun un entraînement de bande intégré.
